# FASCICULE DE BREVET EUROPEEN

(11) **EP 3 019 319 B1**
(45) Date de publication et mention de la délivrance du brevet: **17.01.2018**
(21) Numéro de dépôt: 14749918.0
(22) Date de dépôt: 09.07.2014
(51) Int. Cl.: B29C 45/14

(54) **REVÊTEMENT D'UNE PIÈCE DE TURBOMACHINE PAR SURINJECTION**
BESCHICHTUNG EINES TURBINENTEILS DURCH UMSPRITZEN
COATING OF A TURBINE ENGINE PART BY OVERINJECTION

(30) Priorité: 11.07.2013 FR 1356820
(43) Date de publication de la demande: 18.05.2016
(73) Titulaire: SAFRAN, 75015 Paris (FR); Snecma, 75015 Paris (FR)
(72) Inventeur: TELLIER, Florian, F-77550 Moissy-cramayel Cedex (FR); FOUSSARD, Olivier, F-91450 Etiolles (FR)
(74) Mandataire: Regimbeau
(86) Numéro de dépôt international: PCT/FR2014/051757
(87) Numéro de publication internationale: WO 2015/004384

(56) Documents cités:
- US-A- 5 057 257

## Description

### DOMAINE DE L'INVENTION

L'invention concerne de manière générale les moteurs à turbine à gaz, et plus particulièrement l'application d'un revêtement de protection sur la surface de pièces appartenant à de tels moteurs, notamment des aubes ou des carters en matériau composite.

### ARRIERE-PLAN TECHNOLOGIQUE

Un moteur à turbine à gaz comporte typiquement une nacelle qui forme une ouverture pour l'admission d'un flux déterminé d'air vers le moteur proprement dit. Le turboréacteur comprend une soufflante, adaptée pour assurer une compression initiale de l'air entrant dans le moteur, et une ou plusieurs sections de compression de l'air admis dans le moteur (généralement une section basse pression et une section haute pression). L'air ainsi comprimé est admis dans la chambre de combustion et mélangé avec du carburant avant d'y être brûlé. Les gaz de combustion chauds issus de cette combustion sont ensuite détendus dans différents étages de turbine (généralement une section basse pression et une section haute pression).

Certaines pièces des moteurs comprennent un revêtement de protection de surface afin de les protéger de leur environnement. Typiquement, les pièces en matériau composite, comprenant par exemple un renfort fibreux densifié par une matrice polymère, sont habituellement recouvertes en surface d'un revêtement de protection afin de répondre aux exigences de tenue face à l'environnement du moteur. De telles pièces en matériau composite peuvent avoir des géométries complexes et peuvent notamment comprendre des aubes statiques (aubes redresseurs de la soufflante), des aubes mobiles (aubes de la soufflante), ou encore des carters, ce qui complique l'application de leur revêtement.

Actuellement, les procédés d'application des revêtements de surface sur ces différentes pièces sont difficilement reproductibles. En effet, ces procédés consistent habituellement à coller un film de protection, par exemple un film de polyuréthane vulcanisé, sur la surface à protéger. Or, l'épaisseur du film et de la colle est très difficile à maîtriser, notamment en raison de la géométrie complexe des pièces, de sorte que les dimensions de la pièce finale peuvent fortement varier d'une pièce à l'autre. Par ailleurs, leur surface doit être préparée préalablement au collage du film par abrasion à cause notamment du matériau constitutif de ces pièces, ce qui a tendance à dégrader localement la pièce, à réduire encore davantage la reproductibilité du procédé, et à augmenter le coût et la durée du procédé.

Le choix de la colle utilisée est en outre rendu délicat dans la mesure où celle-ci doit respecter deux conditions parfois contradictoires. Une première condition est que la colle doit pouvoir être mise en oeuvre à une faible température afin de ne pas endommager la pièce, et présenter une température d'utilisation globalement inférieure à une centaine de degrés pour éviter que la matrice, généralement polymère, ne se dégrade sous la chaleur. Une deuxième condition est que la colle doit présenter des propriétés les plus élevées possibles, c'est-à-dire un taux de réticulation approchant 100% afin de présenter des propriétés mécaniques de tenue à l'adhérence suffisantes. Il est donc nécessaire de trouver un compromis entre la préservation de la pièce (température de mise en oeuvre la plus faible possible) et les propriétés de la colle (température élevée) afin d'obtenir des performances optimales pour la pièce finale, ce qui s'avère difficile en pratique.

Enfin, ces procédés connus présentent l'inconvénient d'être polluants et de nécessiter de nombreux outils coûteux et volumineux afin de respecter des règles environnementales concernant la protection de l'opérateur, la limitation des substances volatiles dans l'atmosphère, etc.

Il a également été proposé d'appliquer le revêtement sur la pièce par pulvérisation de matière sous la forme d'une peinture. Néanmoins, ce procédé requière également que la surface à protéger de la pièce soit préalablement préparée (abrasion, réduction des défauts de surface par application de produits destinés à boucher les pores de la surface, etc.), puis qu'une pré-couche soit appliquée afin d'améliorer l'adhérisation de la peinture sur la surface de la pièce. Néanmoins, chacune de ces étapes nécessite la mise en oeuvre de pistolets de pulvérisation adaptés. Par ailleurs, le temps de séchage des différents traitements doit être respecté et la surface de la pièce doit être poncée entre chaque application. Enfin, le procédé doit être réalisé dans des conditions maîtrisées, afin de contrôler la température, l'hygrométrie, et le taux de volatiles de l'atmosphère ainsi que les risques de pollution.

Le document US 5 057 257 quant à lui propose un outillage conforme au préambule de la revendication 1. Toutefois, cet outillage ne permet pas d'appliquer un revêtement de protection sur une surface d'une pièce qui soit facilement.

### RESUME DE L'INVENTION

Un objectif de l'invention est donc de proposer un procédé d'application d'un revêtement de protection sur une surface d'une pièce qui soit facilement reproductible, en permettant notamment d'obtenir une épaisseur définie pour le revêtement, et qui garantisse une bonne cohésion entre la pièce à protéger et son revêtement, sans risquer d'endommager la pièce, tout en étant d'un coût modéré, plus simple et plus rapide à réaliser, et plus respectueux de l'environnement.

Pour cela, l'invention propose un outillage pour la fabrication par injection moulage d'une pièce, notamment une pièce en matériau composite comprenant un renfort fibreux densifié par une matrice, l'outillage comprenant :
- une première empreinte, adaptée pour mouler une première face de la pièce, et
- une deuxième empreinte, adaptée pour mouler une deuxième face de la pièce,
l'outillage étant caractérisé en ce que :
- il comprend en outre un élément de maintien de la pièce, adapté pour maintenir le renfort fibreux de la pièce en position dans l'outillage, la première empreinte, la deuxième empreinte et l'élément de maintien définissant ensemble un volume interne de l'outillage, et
- l'élément de maintien et l'une au moins parmi la première empreinte et la deuxième empreinte sont mobiles l'un par rapport à l'autre, de manière à modifier le volume interne de l'outillage entre une position de moulage, dans laquelle on fabrique la pièce dans l'outillage, et une position de revêtement, dans laquelle on injecte dans ledit outillage le revêtement sur la pièce ainsi fabriquée, le renfort fibreux de la pièce étant maintenu en position par l'élément de maintien dans l'outillage quelle que soit la position de moulage.

Certaines caractéristiques préférées mais non limitatives de l'outillage décrit ci-dessus sont les suivantes :
- l'élément de maintien est en contact étanche avec la première empreinte et la deuxième empreinte quelle que soit la position de moulage, et en ce que la première empreinte et la deuxième empreinte sont mobiles l'une par rapport à l'autre et l'élément de maintien est fixe dans l'outillage, de manière à modifier le volume interne de l'outillage.
- la première empreinte comprend au moins une première face d'étanchéification, la deuxième empreinte comprend au moins une deuxième face d'étanchéification, et l'élément de maintien comprend au moins une paroi, s'étendant en regard de la première face d'étanchéification et de la deuxième face d'étanchéification,
- la première face d'étanchéification et la deuxième face d'étanchéification étant en contact continu avec la paroi en regard de l'élément de maintien, quelle que soit la position relative de l'élément de maintien et desdites empreintes,
- l'outillage comprend en outre au moins un joint d'étanchéité s'étendant entre chaque face d'étanchéification et la paroi en regard de l'élément de maintien,
- au moins l'une parmi la première empreinte et la deuxième empreinte est mobile par rapport à l'élément de maintien entre la position de moulage de la pièce, dans laquelle ladite empreinte est en butée contre l'élément de maintien, de sorte que le volume interne de l'outillage est minimal, et la position de revêtement de la pièce, dans laquelle ladite empreinte est écartée de l'élément de maintien, de sorte que le volume interne de l'outillage est plus grand que son volume minimal, la course de l'empreinte étant limitée par une butée externe,
- l'outillage comprend en outre un moyen de rappel adapté pour appliquer un effort sur l'empreinte mobile par rapport à l'élément de maintien afin de déplacer ladite empreinte de sa position de moulage vers sa position de revêtement,
- la première empreinte et deuxième empreinte comprennent chacune un logement adapté pour recevoir au moins partiellement l'élément de maintien, le moyen de rappel étant un ressort logé dans un orifice du logement de l'empreinte mobile par rapport à l'élément de maintien, et
- l'outillage comprend en outre un organe configuré pour appliquer un effort sur l'empreinte mobile par rapport à l'élément de maintien, ledit effort étant de sens opposé à un effort du moyen de rappel afin de déplacer ladite empreinte de sa position de revêtement vers sa position de moulage.

L'invention propose également un procédé de fabrication d'une pièce par injection moulage dans un outillage comme décrit ci-dessus, notamment d'une pièce en matériau composite comprenant un renfort fibreux densifié par une matrice,
le procédé comprenant les étapes suivantes :
- fabriquer la pièce par injection moulage dans l'outillage, la première empreinte, la deuxième empreinte et l'élément de maintien étant en position pour la fabrication de la pièce,
- déplacer l'une au moins parmi la première empreinte et la deuxième empreinte et/ou l'élément de maintien afin de modifier le volume interne de l'outillage, et créer entre la pièce obtenue suite à l'étape de fabrication et l'outillage un espace non nul, et
- injecter sur la pièce dans l'espace la matière constitutive du revêtement.

Une caractéristique préférée mais non limitative du procédé décrit ci-dessous est que au cours de l'épate de déplacement, la première empreinte et/ou la deuxième empreinte est déplacée, l'élément de maintien et la pièce restant fixes dans l'outillage.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
La figure 1 est une vue schématique en coupe d'un exemple de réalisation d'un outillage, en position initiale afin de fabriquer une pièce ;
La figure 2 est une vue schématique en coupe de l'outillage de la figure 1, en position finale, afin d'appliquer le revêtement sur la pièce ; et

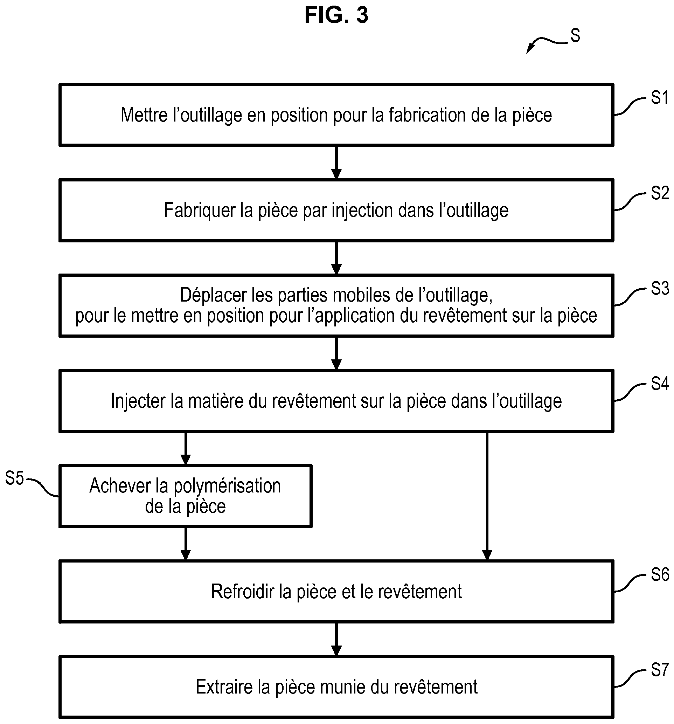

La figure 3 est un organigramme représentant différentes étapes d'un exemple de réalisation du procédé de fabrication d'une pièce conforme à l'invention.

### DESCRIPTION DETAILLEE D'UN MODE DE REALISATION

Dans ce qui suit, l'invention va être décrite plus particulièrement dans le cadre de la fabrication S par injection moulage d'une pièce 2 de moteur à turbine à gaz, comprenant un matériau composite comprenant un renfort fibreux densifié par une matrice, dont une surface est recouverte par un revêtement 3 de protection. Ceci n'est cependant pas limitatif, dans la mesure où l'invention couvre également le cas où les pièces 2 comprennent un autre matériau thermoformable pouvant être injecté dans un outillage par un procédé d'injection moulage, ainsi que la fabrication S de pièces 2 qui ne sont pas nécessairement destinées à être intégrées dans un moteur à turbine à gaz.

La pièce 2 peut notamment être une aube statique (aube de redresseur, aube de distributeur), une aube mobile (aube de soufflante), ou encore un carter.

Ici, la pièce 2 est réalisée en matériau composite, c'est-à-dire dont le matériau constitutif comprend un renfort fibreux densifié par une matrice. Le renfort fibreux de la pièce 2 comprend des fibres, notamment en carbone, verre, aramide ou céramique. La matrice quant à elle est typiquement une matrice polymère, par exemple époxyde, bismaléimide ou polyimide.

Dans le cas où la pièce 2 est un carter, le renfort fibreux peut par exemple être formé par enroulement sur un mandrin d'une texture fibreuse réalisée par tissage tridimensionnel avec épaisseur évolutive conformément à la description de la demande FR 2 913 053, le renfort fibreux constituant alors une préforme fibreuse complète du carter formée en une seule pièce 2 avec des parties de renfort correspondant aux brides.

Le revêtement 3 peut comprendre une matière thermodurcissable, telle que des matériaux polyuréthane injectables ou des matériaux élastomères de type caoutchouc polysulfure, silicone auto-adhérent, Polyuréthane tel que l'adiprène, ou encore des primaires époxy, des peintures époxy, des vernis polyuréthane ou époxy, ou des matières thermoplastiques.

Ces pièces 2 ont des géométries complexes, et sont généralement réalisées par injection de la matrice polymère dans un outillage adapté dans lequel le renfort fibreux a été préalablement disposé. Pour cela, la pièce 2 peut notamment être réalisée conformément aux étapes S2 suivantes :
- Introduction et chauffage de la matière à injecter dans l'outillage 1. Par exemple, la matière peut se présenter sous forme de granulés et être alimentée dans une vis de plastification en rotation dont le fourreau est chauffé à une température adaptée.
- Injection de la matière sous pression dans l'outillage 1, puis maintien de la pression dans l'outillage afin d'éviter tout retrait de la matière lors du refroidissement.
- Refroidissement de la pièce 2 puis extraction.

Ces étapes étant connues de l'homme du métier, elles ne seront pas détaillées davantage dans ce qui suit.

Afin de pouvoir appliquer sur la pièce 2 finie une couche de revêtement 3 d'épaisseur adaptée de manière robuste et reproductible, l'invention propose de surinjecter le revêtement 3 directement sur la pièce 2 dans l'outillage 1 utilisé pour la fabrication de ladite pièce 2. Pour cela l'outillage 1 comprend :
- une première partie moulante, ou empreinte 10, adaptée pour mouler une première face de la pièce 2,
- une deuxième partie moulante, ou empreinte 20, adaptée pour mouler une deuxième face de la pièce 2, et
- un élément de maintien 30, adapté pour maintenir la pièce 2 en position au cours du procédé.

L'élément de maintien 30 permet de positionner la pièce 2 dans l'outillage quelle que soit la position respective des empreintes 10, 20 au cours de la surinjection du revêtement sur la pièce 2. Il est ainsi possible de contrôler facilement l'épaisseur e, e' du revêtement appliqué sur la pièce dans l'outillage 1 par l'intermédiaire du jeu entre chaque empreinte 10, 20 et la pièce 2. A cette fin, l'élément de maintien 30 peut notamment comprendre deux parties 30a, 30b, configurées pour coopérer afin de saisir au moins partiellement la pièce 2 et la maintenir en position dans l'outillage 1. Par exemple, dans l'exemple de réalisation illustré sur les figures, les parties 30a, 30b de l'élément de maintien 30 comprennent des mâchoires adaptées pour venir en prise avec une extrémité du renfort fibreux formant la pièce 2. De la sorte, le renfort fibreux est maintenu en position dans l'outillage 1, tandis que ses première et deuxième face sont en regard des première et deuxième empreintes 10, 20 respectivement.

La première empreinte 10, la deuxième empreinte 20 et l'élément de maintien 30 définissent ensemble un volume interne de l'outillage 1 susceptible de recevoir la pièce 2.

Par ailleurs, l'élément de maintien 30 peut en outre être conformé de manière à venir en contact étanche avec les empreintes 10, 20. Par contact étanche, on comprendra ici qu'au cours de la mise en oeuvre de l'outillage 1 afin de réaliser la pièce 2, le matériau injecté reste contenu dans l'outillage 1, sans fuite entre les empreintes 10, 20 et l'élément de maintien 30.

Le volume interne de l'outillage 1 peut donc être modifié afin de créer un espaces e et/ou e' entre la pièce 2 et les empreintes 10, 20 de l'outillage 1 destiné à recevoir le revêtement 3 de protection de la pièce 2. A cet effet, l'élément de maintien 30 et/ou l'une au moins parmi la première empreinte 10 et la deuxième empreinte 20 sont mobiles l'un par rapport à l'autre entre une position de moulage, dans laquelle on fabrique la pièce 2 dans l'outillage, et une position de revêtement, dans laquelle on injecte dans ledit outillage 1 le revêtement 3 sur la pièce 2 ainsi fabriquée. Dans ce qui suit, on entendra par « parties mobiles » le ou les parties parmi l'élément de maintien 30 et les empreintes 10, 20 qui est déplacée afin de modifier le volume interne de l'outillage 1.

De préférence, lors du déplacement relatif de l'élément de maintien 30 et de l'empreinte 10, 20 en question, le contact entre l'élément de maintien 30 et les deux empreintes 10, 20 reste étanche afin d'éviter toute fuite et d'optimiser le revêtement 3 de la pièce 2.

On notera que, dans le but de pouvoir être utilisé comme outillage 1 pour la fabrication de pièces 2 par injection moulage, l'outillage 1 comprend les moyens habituels d'un outillage pour injection-moulage (non illustrés sur les figures). En particulier, l'outillage 1 peut comprendre un canal d'injection, comprenant une vis et un fourreau de plastification configurés pour ramollir et entrainer la matière à injecter dans l'outillage 1, un organe 14, 24 d'entrainement du type moteur (par exemple hydraulique) configuré pour entrainer la vis de plastification en rotation, ou encore une presse (par exemple hydraulique) adaptée pour appliquer et contrôler la pression interne de l'outillage 1.

Pour permettre de décoller la pièce 2 des parties mobiles et de créer le(s) espace(s) **e, e'** destiné(s) à recevoir le revêtement 3, il est possible d'appliquer un produit siliconé ou démoulant sur les parois moulantes de l'outillage 1 qui sont en contact avec la pièce 2. Néanmoins, ces produits peuvent être polluants, et risquent en outre de réduire l'adhésion du revêtement 3 sur la pièce 2 par micro-transfert du produit sur la pièce 2 préalablement à l'étape S4 d'injection du revêtement 3. Il est donc préférable que les parois moulantes des parties mobiles, à savoir des empreintes 10, 20 et/ou de l'élément de maintien 30, soient réalisées dans un matériau auto-démoulant, tel que du téflon.

Afin de déplacer relativement l'au moins une empreinte 10, 20 et/ou l'élément de maintien 30, l'outillage 1 peut comprendre au moins un moyen de rappel 12, 22, s'étendant entre cette empreinte 10, 20 et l'élément de maintien 30. Le moyen de rappel 12, 22 est configuré pour solliciter l'empreinte 10, 20 et l'élément de maintien 30 en écartement (respectivement en rapprochement, selon le type de moyen de rappel 12, 22 choisi). L'outillage 1 comprend en outre un organe 14, 24, adapté pour appliquer un effort F1, F2 sur l'empreinte 10, 20 ou l'élément de maintien 30 et les solliciter en rapprochement (respectivement en écartement, selon le type de moyen de rappel 12, 22 choisi).

Les déplacements respectifs des parties mobiles de l'outillage 1 sont de préférence des mouvements de translation, afin d'obtenir un revêtement 3 d'épaisseur constante **e, e'** sur chaque face de la pièce 2. Par exemple, le moyen de rappel 12, 22 peut être un ressort en compression s'étendant entre l'empreinte 10 et l'élément de maintien 30 et configuré pour les solliciter en écartement selon la direction X de déplacement, tandis que l'organe 14, 24 peut être un vérin hydraulique ou pneumatique, configuré pour les solliciter en rapprochement selon cette même direction X de déplacement.

Ici, l'élément de maintien 30 est fixe, tandis que l'au moins une empreinte 10, 20 est mobile. Le ressort 12, 22 tend donc à écarter l'empreinte 10, 20 de l'élément de maintien 30, tandis que le vérin 14, 24 tend à la rapprocher de l'élément de maintien 30.

Selon une forme de réalisation, la première empreinte 10 et la deuxième empreinte 20 sont mobiles l'une par rapport à l'autre et par rapport à l'élément de maintien 30. Par exemple, l'élément de maintien 30 peut être fixe, tandis que les deux empreintes 10, 20 sont mobiles par rapport à l'élément de maintien 30. Cette forme de réalisation présente l'avantage de maintenir l'élément de maintien 30 fixe par rapport au reste de l'outillage 1 et de garantir le bon positionnement de la préforme fibreuse par rapport à l'outillage 1 et aux empreintes 10, 20, et donc l'épaisseur **e, e'** du revêtement 3.

Dans cette forme de réalisation, l'outillage 1 comprend alors un moyen de rappel 12, 22 et un organe 14, 24 par empreinte 10, 20. Les deux empreintes 10, 20 sont alors mobiles en écartement et en rapprochement par rapport à l'élément de maintien 30 sur une distance égale à l'épaisseur **e, e'** voulue pour le revêtement sur chaque face de la pièce 2. Par exemple, la première et la deuxième empreinte 20 peuvent se déplacer selon une même direction X, mais dans des sens opposés. Sur les planches de figure, l'effort appliqué par les organes 14, 24 sur les empreintes 10, 20 est symbolisée par les flèches F1, F2.

La première 10 et la deuxième empreinte 20 comprennent au moins une première 16 et une deuxième 26 face d'étanchéification respectivement, adaptées pour venir en contact avec au moins une paroi 36 en regard de l'élément de maintien 30. Afin d'étanchéifier le contact entre les empreintes 10, 20 et l'élément de maintien 30, l'outillage 1 peut comprendre au moins un joint d'étanchéité 18, 28, s'étendant entre chaque face d'étanchéification 16, 26 et la paroi 36 en regard de l'élément de maintien 30. Ainsi, dans un exemple de réalisation, l'outillage 1 peut comprendre trois joints d'étanchéité 18 entre la première face d'étanchéification 16 et la paroi 36, et trois joints d'étanchéité 28 entre la deuxième face d'étanchéification 26 et la paroi 36. L'outillage 1 est donc étanche quelle que soit la position respective des empreintes 10, 20 et de l'élément de maintien 30.

Chacune des empreintes 10, 20 peut comprendre un logement 15, 25, adapté pour recevoir au moins partiellement l'élément de maintien 30. L'élément de maintien 30 s'étend alors entre les deux empreintes 10, 20. Dans cette forme de réalisation, les faces d'étanchéification 16, 26 peuvent alors être constituées de l'une des faces du logement 15, 25. Par ailleurs, chaque partie 30a, 30b de l'élément de maintien 30 s'étend en regard de l'une des empreinte 10, 20.

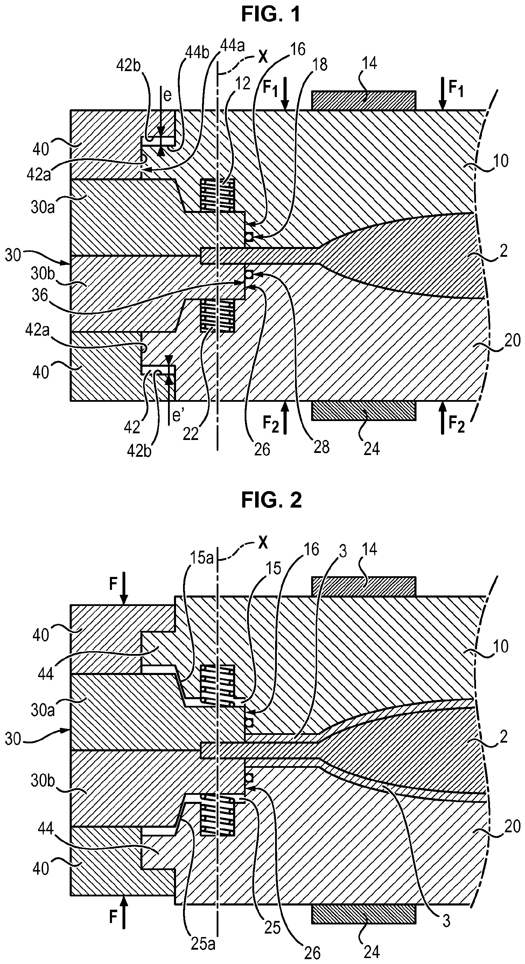

Par exemple, on a illustré sur les figures 1 et 2 un outillage 1 comprenant deux empreintes 10, 20 mobiles par rapport à l'élément de maintien 30, lesdites empreintes 10, 20 comprenant chacune un logement 15, 25 adapté pour recevoir l'élément de maintien 30. Chacun des logements 15, 25 forme deux cavités de volume différent séparées par une paroi de séparation 15a, 25a, et comprend successivement : une première paroi de fond 16, 26 et une première paroi latérale formant la première cavité présentant un premier volume interne, la paroi de séparation 15a, 25a puis une deuxième paroi de fond et une deuxième paroi latérale formant la deuxième cavité présentant un deuxième volume interne, plus grand que le premier volume interne. De façon analogue, l'élément de maintien 30 de la pièce 2 comprend une première protubérance, adaptée pour venir en butée contre les parois de la première cavité, et une deuxième protubérance, adaptée pour venir en butée contre les parois de la deuxième cavité, la deuxième protubérance étant plus large que la première.

La première paroi de fond 16 et/ou la deuxième paroi de fond 26 de chaque cavité peut former la face d'étanchéification de l'empreinte 10, 20 correspondante.

Dans cette forme de réalisation, les moyens de rappel 12, 22 peuvent alors être disposés dans les logements 15, 25. Par exemple, chaque logement 15, 25 peut comprendre un orifice formé dans sa première ou sa deuxième paroi latérale, s'étendant selon la direction X de déplacement des empreintes 10, 20 et adapté pour recevoir l'un des moyens de rappel 12, 22.

En variante, seule l'une des empreintes 10, 20 peut comprendre un tel logement 15, 25, et le cas échéant un orifice destiné à recevoir le moyen de rappel 12, 22.

Afin d'ajuster l'épaisseur de la matière injectée dans l'outillage 1 au niveau de chaque face de la pièce 2, la course des parties mobiles (que ce soit l'élément de maintien 30 et/ou l'une ou l'autre des empreintes 10, 20) peut être limitée par au moins une butée externe 40, configurée de manière à stopper le déplacement des parties mobiles lorsque les espaces **e, e'** souhaités entre la pièce 2 et les parties mobiles 10, 20 est atteinte. En effet, le déplacement des parties mobiles permet de créer des espaces **e, e'** en regard de chacune desdites parties 10, 20 destinés à recevoir la matière du revêtement 3. En contrôlant mécaniquement le déplacement des parties mobiles, on contrôle donc de façon précise et reproductible le volume destiné à recevoir la matière du revêtement 3, et donc l'épaisseur du revêtement 3.

Ainsi, dans le cas où la première et la deuxième empreinte 20 sont mobiles par rapport à l'élément de maintien 30, l'outillage 1 peut comprendre une butée externe 40 au niveau de chacune des empreintes 10, 20, configurée de telle sorte que la course de l'empreinte 10, 20 entre sa position initiale, dans laquelle est moulée la pièce 2, et sa position finale, dans laquelle le revêtement 3 est injecté sur la pièce 2 déjà moulée, est égale à l'épaisseur désirée **e, e'** respectivement pour le revêtement 3.

Par exemple, pour une aube de soufflante en matériau composite, l'épaisseur souhaitée **e, e'** du revêtement 3 est comprise entre 0 mm et 3mm. La course des empreintes 10, 20 est donc comprise entre 0 mm et 3 mm.

Dans l'exemple de réalisation illustré, chaque empreinte 10, 20 de l'outillage 1 est mobile par rapport à l'élément de maintien 30 et à la pièce 2, qui reste fixe dans l'outillage 1. Les butées externes 40 peuvent donc être fixes par rapport à l'élément de maintien 30, et comprennent chacune un renfoncement 42 adapté pour recevoir une saillie 44 de l'empreinte 10, 20 correspondante. Par exemple, la saillie 44 peut comprendre une face avant 44a, adaptée pour venir en butée contre une paroi de fond 42a du renfoncement 42. La face avant 44a et la paroi de fond 42a sont parallèles à la direction de déplacement des parties mobiles, et présentent un jeu afin de permettre ce déplacement. La saillie 44 comprend en outre une face latérale 44b, s'étendant en regard d'une paroi latérale 42b du renfoncement 42, et adaptée pour venir en butée contre ladite paroi 42b lorsque les parties mobiles sont écartées pour créer les espaces **e, e'** adaptés pour recevoir le revêtement 3. La face latérale 44b et la paroi latérale 42b s'étendent donc globalement perpendiculairement à la direction X.

La fabrication de la pièce 2 et l'application S du revêtement 3 de protection sur la pièce 2 à l'aide de cet outillage 1 peut alors être réalisée comme suit.

Au cours d'une première étape S1, l'outillage 1 est mis en position pour la fabrication de la pièce 2. Pour cela, les parties mobiles (l'une au moins des empreintes 10, 20 et/ou l'élément de maintien 30) sont positionnées afin de délimiter la cavité adaptée pour former la pièce 2. Par exemple, dans l'exemple illustré sur les figures, les empreintes 10, 20 sont sollicitées en rapprochement afin de réduire le volume interne de l'outillage 1 en appliquant une pression dans la direction X à l'aide du ou des organes 14,24.

En variante, l'outillage 1 peut déjà être en position. Il n'est alors pas nécessaire de déplacer les empreintes 10, 20 ni l'élément de maintien 30.

Par ailleurs, dans le cas d'une pièce 2 en matériau composite, comprenant un renfort fibreux densifié par une matrice, le renfort fibreux de la pièce 2 est préalablement positionné dans l'outillage 1 au cours de l'étape S1, entre les deux empreintes 10, 20. A cette fin, la préforme fibreuse de la pièce 2 peut notamment être positionnée entre les deux parties 30a, 30b formant l'élément de maintien 30, de sorte que lesdites parties 30a, 30b maintiennent la préforme en position dans l'outillage 1.

Au cours d'une deuxième étape S2, la pièce 2 est fabriquée de manière conventionnelle par injection moulage de son matériau constitutif dans l'outillage 1.

Suite à la fabrication de la pièce 2 et à son refroidissement S2, celle-ci peut rester dans le moule afin de recevoir le revêtement 3 de protection. En variante, la pièce 2 peut être extraite pour subir des opérations annexes, puis réintroduite dans l'outillage 1.

Selon une forme de réalisation, la matrice de la pièce 2 peut être injectée à un taux de polymérisation inférieur à 100%, par exemple compris entre 60 % et 100 % selon la matrice injectée, afin de garantir la cohésion entre la pièce 2 et le revêtement 3 qu'elle est destinée à recevoir. Dans ce cas, la polymérisation de la pièce 2 est complétée lors de l'application du revêtement 3 au cours de la quatrième étape S4 du procédé. Avantageusement, la polymérisation en deux fois de la pièce 2 permet d'améliorer l'adhésion du revêtement 3 sur la pièce 2, notamment lorsque la surface des empreintes 10, 20 de l'outillage 1 présente une faible rugosité.

Ensuite, au cours d'une troisième étape S3, l'outillage 1 est mis en position pour l'application du revêtement 3 sur la pièce 2.

Les parties mobiles sont déplacées, afin d'augmenter le volume interne de l'outillage 1 et de créer le(s) espace(s) **e** et/ou **e'** destiné(s) à recevoir la matière du revêtement 3. L'élément de maintien 30 et la pièce 2 en revanche restent de préférence fixes dans l'outillage 1. Pour cela, la pression appliquée par les organes 14, 24 sur les parties mobiles est suffisamment réduite, voire supprimée, pour permettre aux moyens de rappel 12, 22 de déplacer les parties mobiles. L'effort F1, F2 appliqué par les organes 14, 24 de rappel est alors inférieur à celui appliqué par les ressorts sur les parties mobiles. Parallèlement, la pièce 2 est maintenue en position dans l'outillage 1 à l'aide de l'élément de maintien 30, ce qui permet d'obtenir une épaisseur **e, e'** de revêtement très précise.

Selon une forme de réalisation, préalablement à la suppression de l'effort F1, F2 des organes 14, 24 sur les parties mobiles, il est possible d'exercer un effort F sur les butées externes afin de les maintenir en position par rapport à l'élément de maintien 30 et de maintenir l'élément de maintien 30 bridé suivant axe X. Cet effort F permet en effet de garantir la position relative des butées externes 40 par rapport à l'élément de maintien 30 et donc de la pièce 2 dans l'outillage 1 malgré le déplacement des parties mobiles engendré par les moyens de rappel 12, 22, et donc une épaisseur bien définie pour le revêtement 3. En effet, l'effort F permet de contrer les efforts sur la pièce 2 lors de l'étape S4 de surinjection.

L'outillage 1 est alors en position pour appliquer une couche de revêtement 3 sur la pièce 2. Grâce au contact étanche entre les empreintes 10, 20 et l'élément de maintien 30, et notamment aux joint d'étanchéité 18, 28, l'outillage 1 est fermé et étanche, ce qui permet d'éviter toute fuite de matière et d'appliquer une pression déterminée et stable.

Au cours d'une quatrième étape S4, le revêtement 3 est appliqué sur la pièce 2 dans l'outillage 1 de façon uniforme et reproductible, suivant un procédé d'injection moulage conventionnel.

Ainsi, la matière du revêtement 3 est introduite et chauffée dans l'outillage 1, de préférence via le même canal d'injection que celui utilisé pour la matrice de la pièce 2. En variante, l'outillage peut comprendre un double canal d'injection afin de diminuer la complexité de l'outillage. La matière du revêtement 3 est ensuite injectée sous forte pression dans l'outillage 1 comprenant la pièce 2, fermé de façon étanche. Lors de l'injection, la matière pénètre via le canal d'injection dans les espace **e, e'** créés entre la pièce 2 et les empreintes 10, 20 respectivement par le déplacement des parties mobiles de l'outillage 1, de manière à recouvrir chaque face de la pièce 2 de façon uniforme et à pénétrer dans les irrégularités de surface de la pièce 2, grâce notamment à la pression appliquée par la presse de l'outillage 1.

De manière optionnelle, la pression peut ensuite être maintenue pendant une durée déterminée dans l'outillage 1, afin d'éviter un retrait de la matière du revêtement 3 pendant l'étape de refroidissement.

Le cas échéant, si le taux de polymérisation de la pièce 2 était inférieur à 100% au cours de la première étape, la polymérisation de la pièce 2 est achevée S5.

Enfin, le revêtement 3 est refroidi S6 puis extrait S7 de l'outillage 1, par des moyens conventionnels.

Le cas échéant, la pièce 2 munie de son revêtement 3 peut alors subir des opérations de finition, telles que des opérations d'usinage, d'ébavurage, etc. afin d'éliminer d'éventuelles surépaisseurs dues par exemple aux tolérances de fabrication du procédé d'injection moulage.

L'outillage 1 peut alors être remis en position initiale S1, par application d'un effort F1, F2 sur les parties mobiles par le ou les organes 14, 24, afin de fabriquer une nouvelle pièce.

Le procédé S et l'outillage 1 décrits ci-dessus permettent ainsi d'obtenir un revêtement 3 régulier, présentant des épaisseurs homogènes et un aspect de surface de meilleure qualité que suivant les procédés conventionnels. Par ailleurs, ils ne nécessitent aucun équipement additionnel en plus de l'outillage 1 de fabrication (minimisation des opérations manuelles habituelles consécutives à la fabrication de la pièce, car aucune préparation de surface ou de mise en peinture n'est nécessaire), tout en étant plus respectueux de l'environnement (pas d'émanations volatiles et diminution du nombre de consommables utilisés).

## Revendications

1. Outillage (1) pour la fabrication d'une pièce (2) et l'application d'un revêtement (3) sur ladite pièce (2) par injection moulage, notamment une pièce en matériau composite comprenant un renfort fibreux densifié par une matrice, l'outillage (1) comprenant :
- une première empreinte (10), adaptée pour mouler une première face de la pièce (2), et
- une deuxième empreinte (20), adaptée pour mouler une deuxième face de la pièce (2), et
- un élément de maintien (30) de la pièce (2), adapté pour maintenir le renfort fibreux de la pièce (2) en position dans l'outillage (1), la première empreinte (10), la deuxième empreinte (20) et l'élément de maintien (30) définissant ensemble un volume interne de l'outillage,
l'outillage (1) étant **caractérisé en ce que** l'élément de maintien (30) et l'une au moins parmi la première empreinte (10) et la deuxième empreinte (20) sont mobiles l'un par rapport à l'autre, de manière à modifier le volume interne de l'outillage (1) entre une position de moulage, dans laquelle on fabrique la pièce dans l'outillage (1), et une position de revêtement, dans laquelle on injecte dans ledit outillage (1) le revêtement (3) sur la pièce (2) ainsi fabriquée, le renfort fibreux de la pièce (2) étant maintenu en position par l'élément de maintien (30) dans l'outillage (1) quelle que soit la position de moulage.

2. Outillage (1) selon la revendication 1, dans lequel l'élément de maintien (30) est en contact étanche avec la première empreinte (10) et la deuxième empreinte (20) quelle que soit la position de moulage, et en ce que la première empreinte (10) et la deuxième empreinte (20) sont mobiles l'une par rapport à l'autre et l'élément de maintien (30) est fixe dans l'outillage (1), de manière à modifier le volume interne de l'outillage (1).

3. Outillage (1) selon l'une des revendications 1 ou 2, dans lequel :
- la première empreinte (10) comprend au moins une première face d'étanchéification (16),
- la deuxième empreinte (20) comprend au moins une deuxième face d'étanchéification (26), et
- l'élément de maintien (30) comprend au moins une paroi (36), s'étendant en regard de la première face d'étanchéification (16) et de la deuxième face d'étanchéification (26),
l'outillage comprenant en outre au moins un joint d'étanchéité (18, 28) s'étendant entre chaque face d'étanchéification (16, 26) et la paroi (36) en regard de l'élément de maintien (30).

4. Outillage (1) selon l'une des revendications 1 à 3, dans lequel au moins l'une parmi la première empreinte (10) et la deuxième empreinte (20) est mobile par rapport à l'élément de maintien (30) entre :
- la position de moulage de la pièce (2), dans laquelle ladite empreinte (10, 20) est en butée contre l'élément de maintien (30), de sorte que le volume interne de l'outillage (10) est minimal, et
- la position de revêtement de la pièce (2), dans laquelle ladite empreinte (10, 20) est écartée de l'élément de maintien (30), de sorte que le volume interne de l'outillage (1) est plus grand que son volume minimal, la course de l'empreinte (10, 20) étant limitée par une butée externe (40).

5. Outillage (1) selon la revendication 4, comprenant en outre un moyen de rappel (12, 22) adapté pour appliquer un effort sur l'empreinte (10, 20) mobile par rapport à l'élément de maintien (30) afin de déplacer ladite empreinte (10, 20) de sa position de moulage vers sa position de revêtement.

6. Outillage (1) selon la revendication 5, dans lequel la première empreinte (10) et deuxième empreinte (20) comprennent chacune un logement (15, 25) adapté pour recevoir au moins partiellement l'élément de maintien (30), le moyen de rappel (12, 22) étant un ressort logé dans un orifice du logement (15, 25) de l'empreinte (10, 20) mobile par rapport à l'élément de maintien (30).

7. Outillage (1) selon l'une des revendications 5 ou 6, comprenant en outre un organe (14, 24) configuré pour appliquer un effort (F1, F2) sur l'empreinte (10, 20) mobile par rapport à l'élément de maintien (30), ledit effort (F1, F2) étant de sens opposé à un effort du moyen de rappel (12, 22) afin de déplacer ladite empreinte (10, 20) de sa position de revêtement vers sa position de moulage.

8. Procédé (S) de fabrication d'une pièce (2) par injection moulage dans un outillage (1) selon l'une des revendications 1 à 7, notamment d'une pièce (2) en matériau composite comprenant un renfort fibreux densifié par une matrice,
le procédé (S) comprenant les étapes suivantes :
- positionner (S1) le renfort fibreux de la pièce (2) dans l'élément de maintien (30) de l'outillage (1),
- fabriquer (S2) la pièce (2) par injection moulage dans l'outillage (1), la première empreinte (10), la deuxième empreinte (20) et l'élément de maintien (30) étant en position pour la fabrication de la pièce (2),
- déplacer (S3) l'une au moins parmi la première empreinte (10) et la deuxième empreinte (20) et/ou l'élément de maintien (30) afin de modifier le volume interne de l'outillage, et créer entre la pièce (2) obtenue suite à l'étape (S2) de fabrication et l'outillage un espace (**e, e**') non nul, et
- injecter (S4) sur la pièce (2) dans l'espace (**e, e'**) la matière constitutive du revêtement (3).

9. Procédé (S) selon la revendication 8, dans lequel au cours de l'épate de déplacement (S3), la première empreinte (10) et/ou la deuxième empreinte (20) est déplacée, l'élément de maintien (30) et la pièce (2) restant fixes dans l'outillage (1).

## Patentansprüche

1. Werkzeug (1) zur Herstellung eines Werkstücks (2) und Aufbringen einer Beschichtung (3) auf das Werkstück (2) durch Spritzguss, insbesondere ein Werkstück aus Verbundwerkstoff, das eine durch eine Matrix verdichtete faserige Verstärkung aufweist, wobei das Werkzeug (1) Folgendes umfasst:
- einen ersten Abdruck (10), der geeignet ist, eine erste Fläche des Werkstücks (2) zu formen,
- einen zweiten Abdruck (20), der geeignet ist, eine zweite Fläche des Werkstücks (2) zu formen, und
- ein Halteelement (30) des Werkstücks (2), das geeignet ist, die faserige Verstärkung des Werkstücks (2) im Werkzeug (1) in Stellung zu halten, wobei der erste Abdruck (10), der zweite Abdruck (20) und das Halteelement (30) gemeinsam einen Innenraum des Werkzeugs definieren,
wobei das Werkzeug (1) **dadurch gekennzeichnet ist, dass** das Halteelement (30) und zumindest einen vom ersten Abdruck (10) und dem zweiten Abdruck (20) relativ zueinander beweglich sind, um den Innenraum des Werkzeugs (1) zwischen einer Formposition, wobei das Werkstück im Werkzeug (1) hergestellt wird, und einer Beschichtungsposition zu ändern, wobei die Beschichtung (3) auf das so hergestellte Werkstück (2) im Werkzeug (1) eingespritzt wird, wobei die faserige Verstärkung des Werkstücks (2) vom Halteelement (30) im Werkzeug (1) in jeder beliebigen Formposition in Stellung gehalten wird.

2. Werkzeug (1) nach Anspruch 1, wobei das Halteelement (30) mit dem ersten Abdruck (10) und dem zweiten Abdruck (20) unabhängig von der Formposition in dichter Berührung steht, und wobei der erste Abdruck (10) und der zweite Abdruck (20) relativ zueinander beweglich sind und das Halteelement (30) im Werkzeug (1) fix ist, um den Innenraum des Werkzeugs (1) zu verändern.

3. Werkzeug (1) nach einem der Ansprüche 1 oder 2, wobei:
- der erste Abdruck (10) zumindest eine erste Dichtungsfläche (16) umfasst,
- der zweite Abdruck (20) zumindest eine zweite Dichtungsfläche (26) umfasst, und
- das Halteelement (30) zumindest eine Wand (36) umfasst, die sich gegenüber der ersten Dichtungsfläche (16) und der zweiten Dichtungsfläche (26) erstreckt, wobei das Werkzeug ferner zumindest eine Dichtung (18, 28) umfasst, die sich zwischen jeder Dichtungsfläche (16, 26) und der Wand (36) gegenüber dem Halteelement (30) erstreckt.

4. Werkzeug (1) nach einem der Ansprüche 1 bis 3, wobei zumindest einen vom ersten Abdruck (10) und dem zweiten Abdruck (20) relativ zum Halteelement (30) beweglich ist, und zwar zwischen:
- der Formposition des Werkstücks (2), wobei der Abdruck (10, 20) am Halteelement (30) im Anschlag ist, so dass der Innenraum des Werkzeugs (10) minimal ist, und
- der Beschichtungsposition des Werkstücks (2), wobei der Abdruck (10, 20) vom Halteelement (30) entfernt ist, so dass der Innenraum des Werkzeugs (1) größer als sein minimaler Raum ist, wobei der Hub des Abdrucks (10, 20) durch einen äußeren Anschlag (40) begrenzt wird.

5. Werkzeug (1) nach Anspruch 4, das ferner ein Rückstellmittel (12, 22) umfasst, das geeignet ist, eine Kraft auf den beweglichen Abdruck (10, 20) gegenüber dem Halteelement (30) aufzubringen, um den Abdruck (10, 20) von seiner Formposition zu seiner Beschichtungsposition zu verbringen.

6. Werkzeug (1) nach Anspruch 5, wobei der erste Abdruck (10) und der zweite Abdruck (20) jeweils eine Aufnahme (15, 25) aufweisen, die geeignet ist, das Halteelement (30) zumindest teilweise aufzunehmen, wobei das Rückstellmittel (12, 22) eine Feder ist, die in einer Öffnung der Aufnahme (15, 25) des relativ zum Halteelement (30) beweglichen Abdrucks (10, 20) untergebracht ist.

7. Werkzeug (1) nach einem der Ansprüche 5 oder 6, das ferner ein Organ (14, 24) umfasst, das so konfiguriert ist, dass es eine Kraft (F1, F2) auf den relativ zum Halteelement (30) beweglichen Abdruck (10, 20) aufbringt, wobei die Kraft (F1, F2) in zu einer Kraft des Rückstellmittels (12, 22) entgegengesetzten Richtung wirkt, um den Abdruck (10, 20) von seiner Beschichtungsposition zu seiner Formposition zu verbringen.

8. Verfahren (S) zur Herstellung eines Werkstücks (2) durch Spritzguss in einem Werkzeug (1) nach einem der Ansprüche 1 bis 7, insbesondere eines Werkstücks (2) aus Verbundwerkstoff, der eine durch eine Matrix verdichtete faserige Verstärkung aufweist,
wobei das Verfahren (S) die folgenden Schritte umfasst:
- die faserige Verstärkung des Werkstücks (2) im Halteelement (30) des Werkzeugs (1) positionieren (S1),
- das Werkstück (2) durch Spitzguss im Werkzeug (1) herstellen (S2), wobei der erste Abdruck (10), der zweite Abdruck (20) und das Halteelement (30) für die Herstellung des Werkstücks (2) in Stellung sind,
- zumindest einen vom ersten Abdruck (10) und dem zweiten Abdruck (20) und/oder das Halteelement (30) verschieben (S3), um den Innenraum des Werkzeugs zu ändern, und um zwischen dem beim Herstellungsschritt (S2) erzielten Werkstück (2) und dem Werkzeug einen Raum (e, e') zu schaffen, der nicht Null ist, und
- auf das Werkstück (2) im Raum (e, e') die Materialkomponente der Beschichtung (3) einspritzen (S4) .

9. Verfahren (S) nach Anspruch 8, wobei beim Verbringungsschritt (S3) der erste Abdruck (10) und/oder der zweite Abdruck (20) verbracht wird, wobei das Halteelement (30) und das Werkstück (2) fix im Werkzeug (1) bleiben.

## Claims

1. A tool (1) for manufacturing a piece (2) and applying a coating (3) to said piece (2) by injection molding, particularly a piece made of composite material comprising a fiber reinforcement densified by a matrix, the tool (1) comprising:
- a first impression (10), adapted for molding a first face of the piece (2), and
- a second impression (20), adapted for molding a second face of the piece (2), and
- an element (30) for holding the piece (2), adapted for holding the fiber reinforcement of the piece (2) in position into the tool (1), the first impression (10), the second impression (20) and the holding element (30) together defining an inner volume of the tool,
the tool (1) being **characterized in that** the holding element (30) and at least one of the first impression (10) and the second impression (20) are movable in relation to one another, in such a way as to modify the inner volume of the tool (1) between a molding position, in which the piece is manufactured into the tool (1), and a coating position, in which the coating (3) is injected in said tool (1) onto the piece (2) thus manufactured, the fiber reinforcement of the piece (2) being held in position by the holding element (30) into the tool (1) whatever the molding position.

2. The tool (1) according to claim 1, wherein the holding element (30) is in sealing contact with the first impression (10) and the second impression (20) whatever the molding position, and in that the first impression (10) and the second impression (20) are movable in relation to one another and the holding element (30) is fixed into the tool (1), in such a way as to modify the inner volume of the tool (1).

3. The tool (1) according to one of claims 1 or 2, wherein:
- the first impression (10) comprises at least a first sealing face (16),
- the second impression (20) comprises at least a second sealing face (26), and
- the holding element (30) comprises at least a wall (36), extending facing the first sealing face (16) and the second sealing face (26),
the tool further comprising at least a seal (18, 28) extending between each sealing face (16, 26) and the wall (36) facing the holding element (30).

4. The tool (1) according to one of claims 1 to 3, wherein at least one of the first impression (10) and the second impression (20) is movable in relation to the holding element (30) between:
- the position of molding of the piece (2), in which said impression (10, 20) is abutting against the holding element (30), so that the inner volume of the tool (10) is minimal, and
- the position of coating of the piece (2), in which said impression (10, 20) is moved away from the holding element (30), so that the inner volume of the tool (1) is greater than its minimal volume, the track of the impression (10, 20) being limited by an outer end stop (40).

5. The tool (1) according to claim 4, further comprising a return means (12, 22) adapted for applying a force to the impression (10, 20) which is movable in relation to the holding element (30) in order to displace said impression (10, 20) from its molding position to its coating position.

6. The tool (1) according to claim 5, wherein the first impression (10) and the second impression (20) each comprise a housing (15, 25) adapted for at least partly receiving the holding element (30), the return means (12, 22) being a spring housed in an orifice of the housing (15, 25) of the impression (10, 20) movable in relation to the holding element (30).

7. The tool (1) according to one of claims 5 or 6, further comprising a member (14, 24) configured to apply a force (F1, F2) to the impression (10, 20) movable in relation to the holding element (30), said force (F1, F2) being in the opposite direction to a force of the return means (12, 22) in order to displace said impression (10, 20) from its coating position to its molding position.

8. A method (S) for manufacturing a piece (2) by injection molding in a tool (1) according to one of claims 1 to 7, particularly a piece (2) made of composite material comprising a fiber reinforcement densified by a matrix, the method (S) comprising the following steps:
- positioning (S1) the fiber reinforcement of the piece (2) in the holding element (30) of the tool (1),
- manufacturing (S2) the piece (2) by injection molding into the tool (1), the first impression (10), the second impression (20) and the holding element (30) being in position for the manufacturing of the piece (2),
- displacing (S3) at least one of the first impression (10) and the second impression (20) and/or the holding element (30) in order to modify the inner volume of the tool, and create between the piece (2) obtained following the manufacturing step (S2) and the tool a non-zero space (**e, e'**), and
- injecting (S4) onto the piece (2) in the space (**e, e'**) the constituent material of the coating (3).

9. The method (S) according to claim 8, wherein in the displacement step (S3), the first impression (10) and/or the second impression (20) is displaced, the holding element (30) and the piece (2) remaining fixed into the tool (1).
